# EUROPEAN PATENT APPLICATION

(11) **EP 3 992 757 A2**
(43) Date of publication of application: **04.05.2022**
(21) Application number: 21201193.6
(22) Date of filing: 06.10.2021
(51) Int. Cl.: G06F 1/16, G06F 1/26, F16M 11/10, F16M 11/12, H02J 50/10

(54) **DOCKING STATION**

(30) Priority: 09.10.2020 US 202063089819 P
(71) Applicant: ACCO Brands Corporation, Lake Zurich, IL 60047-8997 (US)
(72) Inventor: CAMPBELL, Erik, San Francisco, CA 94123 (US); HUANG, Yu-Chia, New Tapipei City, Taiwan, 23742 (CN)
(74) Representative: Forresters IP LLP

(57) **Abstract**

A docking station for a portable electronic device includes a stand having a base portion and an upright portion extending from the base portion, a support member coupled to the upright portion of the stand at a height above the base, the support member having a tablet-coupling side at least partially defined by a plate configured to magnetically couple the portable electronic device to the tablet-coupling side of the support member, and a lip extending outwardly from the tablet-coupling side and configured to assist in aligning the portable electronic device relative to the plate of the tablet-coupling side of the support member.

## Description

### CROSS-REFERENCE TO RELATED APPLICATIONS

The present application claims benefit of U.S. Provisional Patent Application No. 63/089,819, filed October 9, 2020, the entire contents of which are incorporated herein by reference.

### BACKGROUND

Docking stations support portable electronic devices and allow the portable electronic devices to couple to other electronic devices. Some docking stations support the portable electronic devices above desktop surfaces.

### SUMMARY

The present disclosure relates to a docking station for a portable electronic device. The docking station includes a stand having a base portion and an upright portion extending from the base portion, a support member coupled to the upright portion of the stand at a height above the base, the support member having a tablet-coupling side at least partially defined by a plate configured to magnetically couple the portable electronic device to the tablet-coupling side of the support member, and a lip extending outwardly from the tablet-coupling side and configured to assist in aligning the portable electronic device relative to the plate of the tablet-coupling side of the support member.

The present disclosure relates further to a docking station for a first portable electronic device and a second portable electronic device The docking station includes a stand having a base portion and an upright portion extending from the base portion, the base portion configured to support the second portable electronic device, a support member movably coupled to the upright portion of the stand at a height above the base, the support member configured to support the first portable electronic device at a height above the base, and a wireless charging mechanism positioned within the base portion and configured to charge the second portable electronic device.

The present disclosure further relates to a docking station for a first portable electronic device and a second portable electronic device. The docking station includes a stand having a base portion and an upright portion extending from the base portion, a support member coupled to the upright portion of the stand at a height above the base, the support member having a tablet-coupling side at least partially defined by a plate configured to magnetically couple the first portable electronic device to the tablet-coupling side of the support member, an electrical connector mounted to the support member and configured to charge the first portable electronic device and an adapter removably mounted to the support member, the adapter configured to support and wirelessly charge the second portable electronic device when the adapter is mounted to the support member.

### BRIEF DESCRIPTION OF THE DRAWINGS

Fig. 1 is a front perspective view of a docking station supporting a plurality of mobile devices and including a support member, a stand, a coupling mechanism, and an adapter.
Fig. 2 is a rear perspective view of the docking station of Fig. 1.
Fig. 3 is a front perspective view of the docking station of Fig. 1 without the plurality of mobile devices.
Fig. 4 is a rear perspective view of the docking station of Fig. 1 without the plurality of mobile devices.
Fig. 5 is a front perspective view of the docking station of Fig. 1 without the plurality of mobile devices and the adapter.
Fig. 6 is a rear perspective view of the docking station of Fig. 1 without the plurality of mobile devices and the adapter.
Fig. 7 is a rear view of the support member with the stand removed.

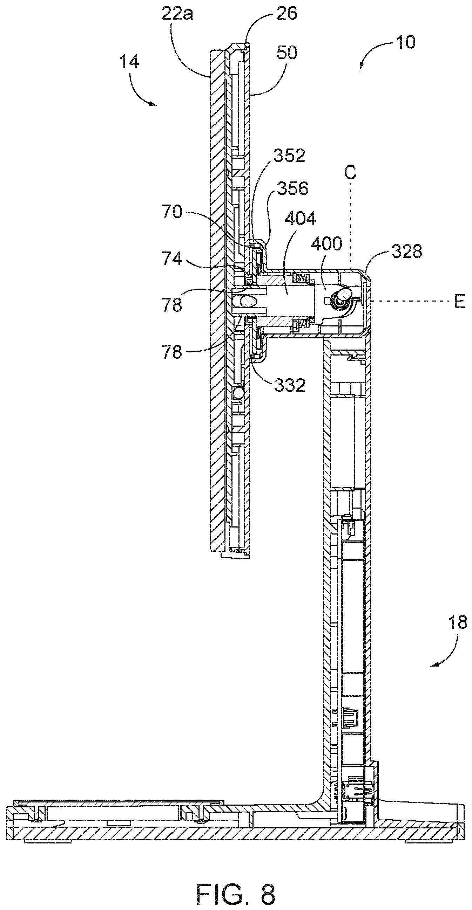

Fig. 8 is a cross-sectional view of the docking station taken along section line 8--8 of Fig. 6.
Fig. 9 is a front view of the docking station with a portion of the support member removed and a portion of the stand removed.
Fig. 10 is a rear view of the docking station with the stand removed.
Fig. 11 illustrates a connector body that is supported by the support member.
Fig. 12 is a perspective view of the docking station including a portion of a housing of the coupling mechanism removed.
Fig. 13 is a perspective view of the coupling mechanism.
Fig. 14 is another perspective view of the coupling mechanism.
Fig. 15 is a perspective view of the coupling mechanism with the housing removed.
Fig. 16 is another perspective view of the coupling mechanism with the housing removed.
Fig. 17 is a perspective view of the adapter.
Fig. 18 is another perspective view of the adapter with a portion of the housing removed.

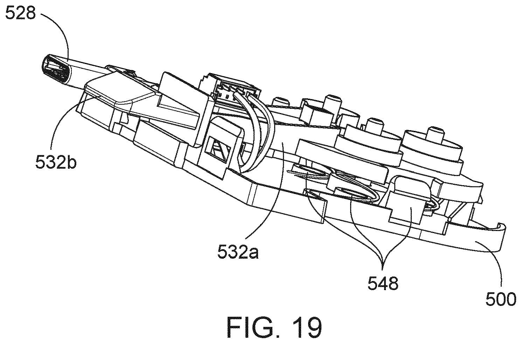

Fig. 19 is another perspective view of the adapter with a portion of the housing and a magnetic charging module removed.

### DETAILED DESCRIPTION

Before any embodiments are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect.

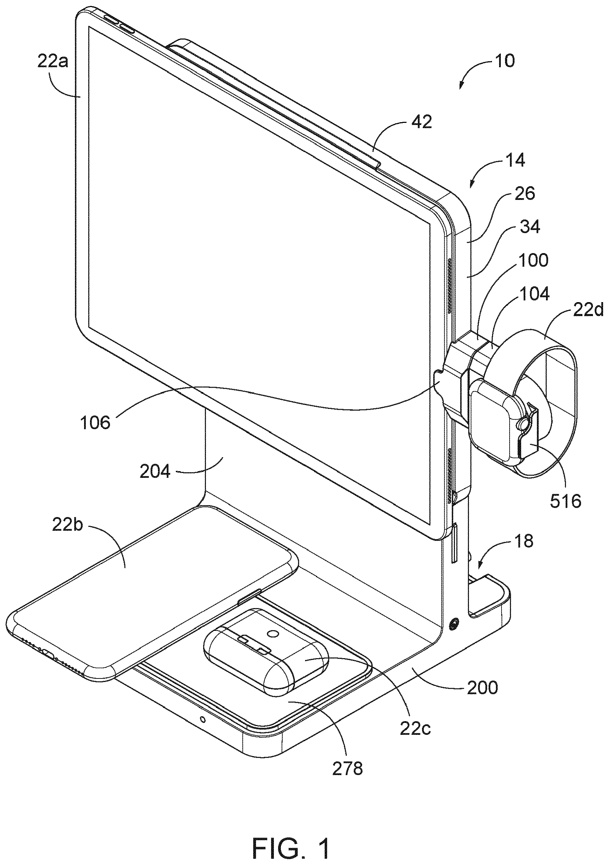

Figs. 1-6 illustrate a docking station 10 that is capable of mechanically and/or electrically coupling to a plurality of electronic devices 22a, 22b, 22c, 22d. The electronic devices 22a, 22b, 22c, 22d may also be referred to as portable electronic devices, mobile devices, or mobile electronic devices. The illustrated docking station 10 supports four electronic devices 22a, 22b, 22c, 22d. In the illustrated embodiment, the first electronic device 22a is a tablet computer, the second electronic device 22b is a phone (e.g., a smartphone), the third electronic device 22c is a set of wireless headphones, and the fourth electronic device 22d is a watch or other wearable device. In other embodiments, the docking station 10 may support fewer or more devices, and/or other types of devices. In the illustrated embodiment, the docking station 10 includes a support member 14 that is movably (e.g., pivotably, rotatably, tiltably) coupled to a stand 18. The support member 14 may also be referred to as a tablet holder.

With respect to Figs. 1-3, the support member 14 is configured to mechanically and electrically couple the tablet computer 22a to the stand 18. The support member 14 includes a housing 26 that is polygonal (e.g., hexagonal). That is, the housing 26 includes a first edge 30, a second edge 34 opposite the first edge 30, a third edge 38, and a fourth edge 42 opposite the third edge 38. Each of the first edge 30 and the second edge 34 have a first portion 30a, 34a and a second portion 30b, 34b that is angled relative to the first portion 30a, 34a. As shown, the third edge 38 is coupled to the first portion 30a of the first edge 30 at a perpendicular angle, but the fourth edge 42 is coupled to the second portion 30b of the first edge 30 at a non-perpendicular angle. Similarly, as shown, the third edge 38 is coupled to the second portion 34b of the second edge 34 at a non-perpendicular angle, but the fourth edge 42 is coupled to the first portion 34a of the second edge 34 at a perpendicular angle. A longitudinal axis A is defined between the first edge 30 and the second edge 34, and a transverse axis B is defined between the third edge 38 and the fourth edge 42. The longitudinal axis A is perpendicular to the transverse axis B. A distance between the first edge 30 and the second edge 34 is greater than a distance between the third edge 38 and the fourth edge 42.

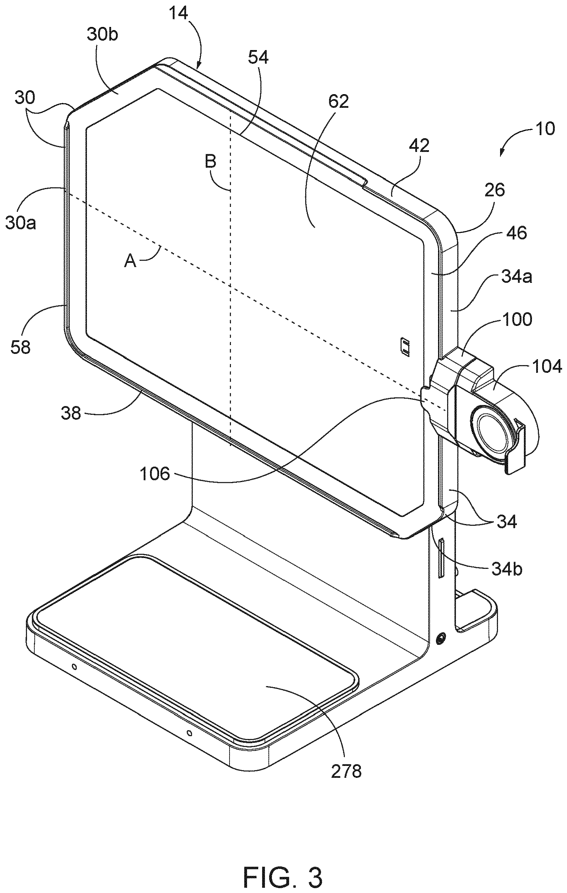

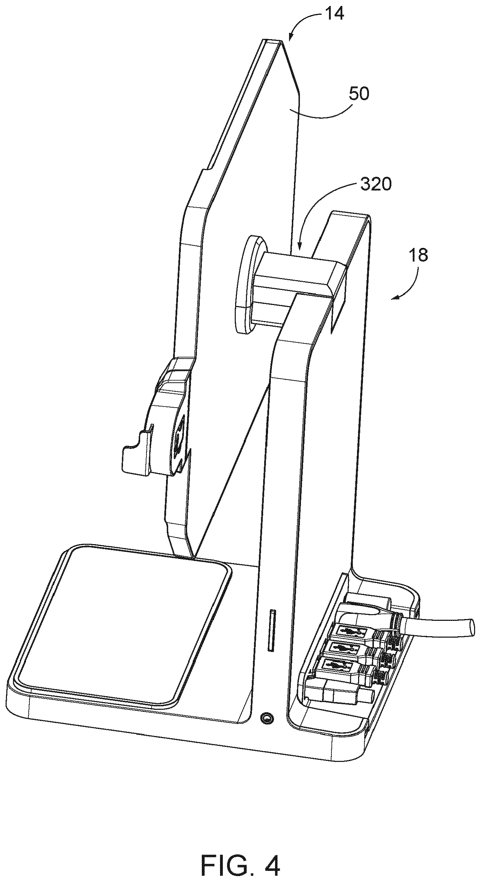

Further with respect to Figs. 3 and 4, the housing 26 further includes a tablet-coupling side 46 and a stand-coupling side 50. A recess 54 is defined in the tablet-coupling side 46. A lip 58 extends outwardly from the tablet-coupling side 50. The recess 54 receives a magnetic (e.g., metal) plate 62 that is configured to attract the magnets on a rear surface of the tablet computer 22a. In the illustrated embodiment, the metal plate 62 is a steel plate, although other materials may be used in other embodiments. The lip 58 extends from and about at least a portion of the periphery of housing 26. In particular, the lip 58 extends along a length of at least a portion of each of the first, second, third, and fourth edges 30, 34, 38, 42. In the illustrated embodiment, the lip 58 does not extend along the second portions 30b, 34b of the first and second edges 30, 34. The lip 58 assists in positioning the tablet computer 22a on the support member 14. Because of the angled second portions 30b, 34b of each of the first side 30 and the second side 34, there exist cutout areas that the tablet computer 22a does not overlap the support member 14. Accordingly, these cutout areas allow the user to grasp the edges of the tablet computer 22a to provide a force on the tablet computer 22a that overcomes the magnetic force between the magnetic plate 62 and the tablet computer 22a to remove the tablet computer 22a from the support member 14.

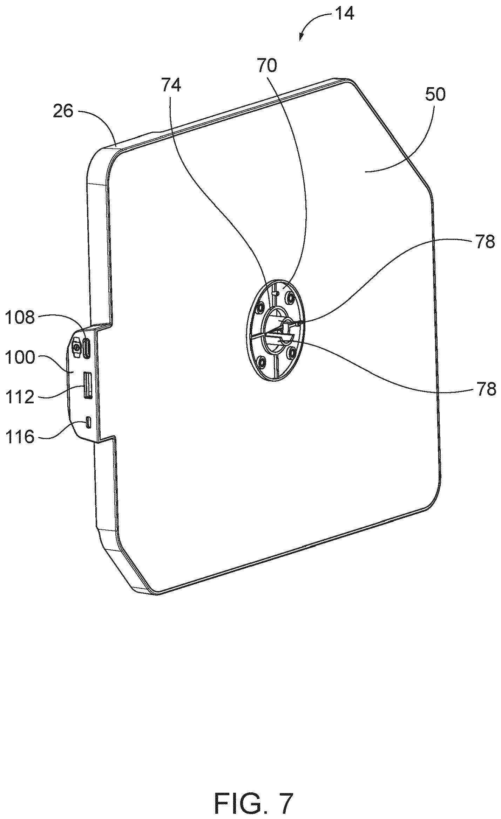

As shown in Fig. 7, the stand-coupling side 50 includes a wall 70 extending therefrom and an aperture 74. In the illustrated embodiment, the wall 70 and the aperture 74 are circular. The wall 70 is located generally at a center or midpoint of the housing 26. The aperture 74 is positioned within and concentric with the recess wall 70. A pair of projections 78 extend from an interior surface of the housing 26 through the aperture 74.

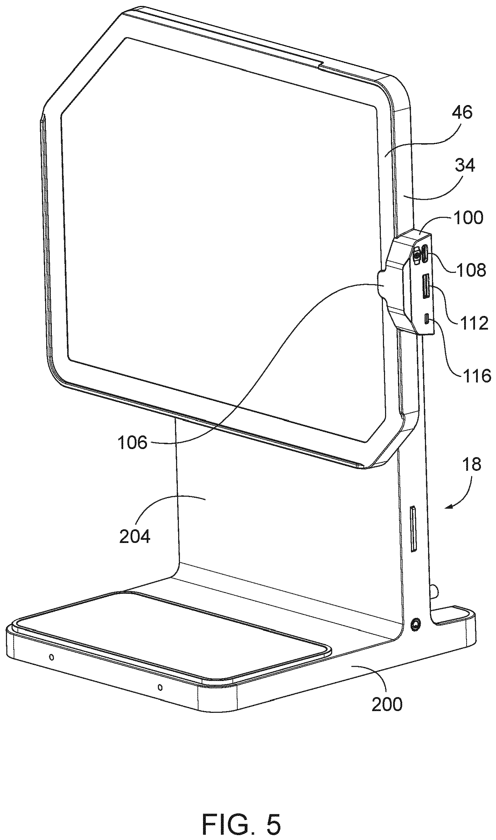

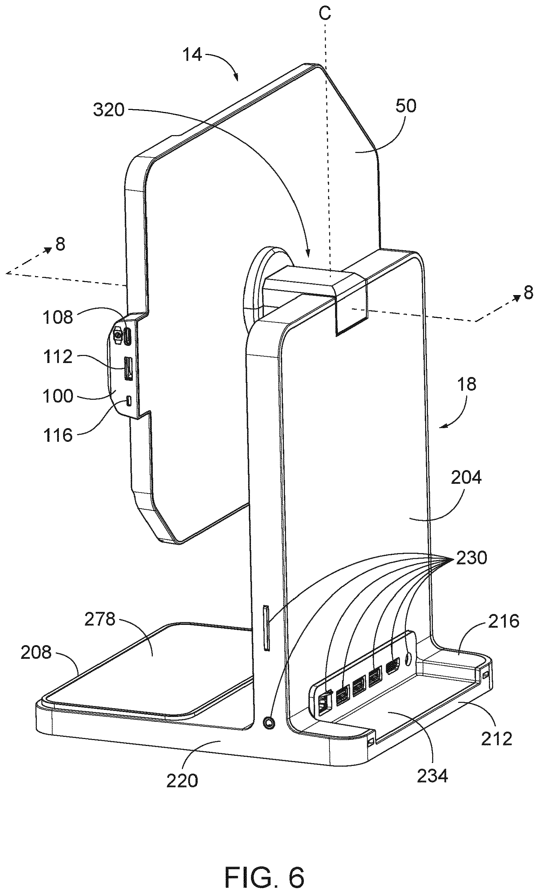

With respect to Figs. 5 and 6, specifically, the housing 26 of the support member 14 includes a connector portion 100 that is configured to electrically couple the tablet computer 22a and an adapter 104 (e.g., dongle) thereto. In the illustrated embodiment, the connector portion 100 is integrally formed with or otherwise coupled to the second edge 34 of the housing 26 of the support member 14. In other embodiments, the connector portion 100 may be integrally formed with (or otherwise coupled to) another edge of the housing 26. The connector portion 100 includes a projection 106, a first aperture 108, a second aperture 112 adjacent the first aperture 108, and a recess 116 adjacent the second aperture 112.

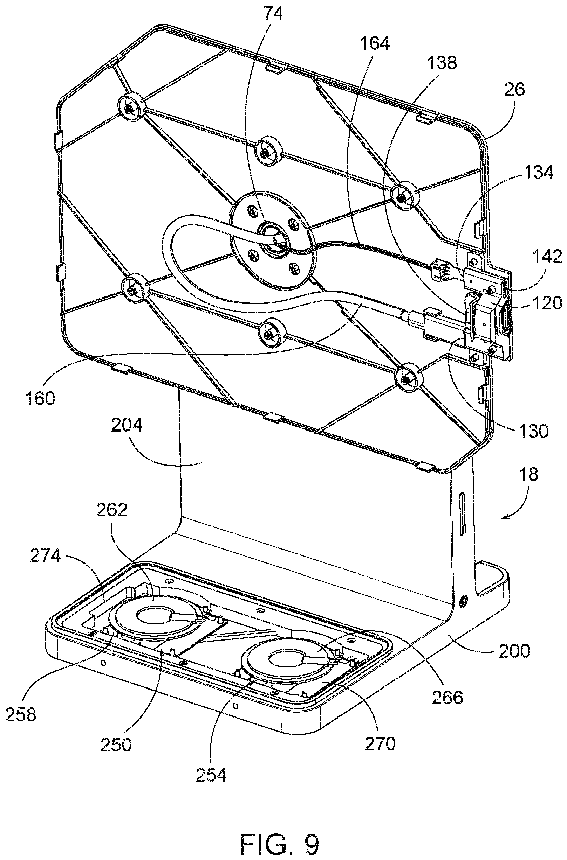

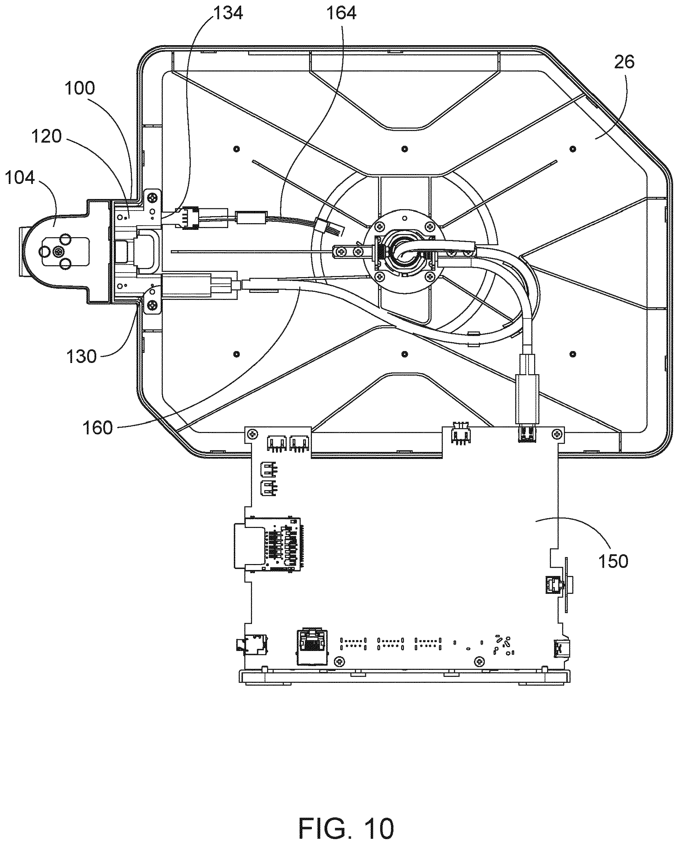

With respect to Fig. 9-11, the connector portion 100 also supports a connector body 120, which has a first input port 130, a second input port 134, an electrical connector 138, and an output port 142. The first input port 130 and the second input port 134 are in communication with an interior of the housing 26. The first input port 130 is in electrical communication with a first or main printed circuit board 150 positioned in the stand 18 and the electrical connector 138. In particular, the first input port 130 is configured to receive a first cable 160 (e.g., a USB-C cable), which provides power and/or data to the electrical connector 138. In the illustrated embodiment, the electrical connector 138 extends parallel to the tablet-coupling side 46 of the support member 14 in a space defined between the projection 106 and the tablet-coupling side 46. The tablet computer 22a is received in the space to connect a port of the tablet computer 22a with the electrical connector 138 to electrically connect the tablet computer 22a with the docking station 10 (e.g., to charge the tablet computer 22a and to allow the tablet computer 22a to communicate with ports 230 in the stand 18). The second input port 134 is in electrical communication with the first printed circuit board 150 and the output port 142. In particular, the second output port 134 is configured to receive a second cable 164, which provides power to the output port 142. The output port 142 is positioned opposite the electrical connector 138 and is accessible via the first aperture 108 of the connector portion 100. Accordingly, the output port 138 is configured to receive and electrically couple the adapter 104 to the support member 14, which will be discussed in greater detail below.

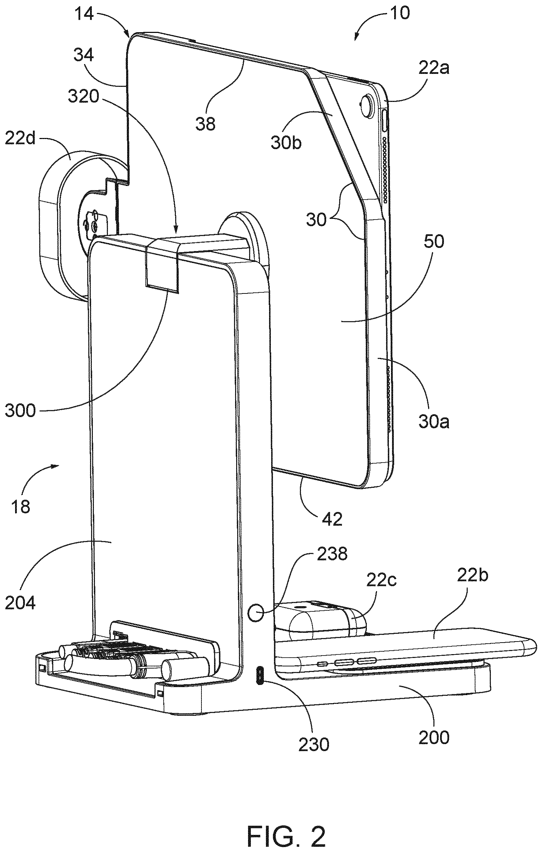

With particular respect to Figs. 1, 2, and 6, the stand 18 includes a base portion 200 and an upright portion 204 integrally formed with (or otherwise coupled to) and extending from the base portion 200. In the illustrated embodiment, base portion 200 includes a first side 208, a second side 212 opposite the first side 212, a third side 216, and a fourth side 220 opposite the third side 216. The upright portion 204 is positioned between the first side 208 and the second side 212 and extends between the third side 216 and the third side 220. The upright portion 204 defines a longitudinal axis C. The longitudinal axis C is also a vertical axis. The upright portion 204 is positioned closer to the second side 212 of the base portion 200 than the first side 212 of the base portion 200. The first printed circuit board 150 is positioned in the upright portion 204. The stand 18 includes a plurality of ports 230 that are in electrical communication with the first printed circuit board 150. In the illustrated embodiment, a recess 234 is defined in the base portion 200. The recess 234 accommodates the plugs and cords of the plugs that are received in ports 230 adjacent the second side 212 of the stand 18. The plurality of ports 230 may include one or more of an RJ-45, USB-A, USB-C, HDMI, DC power, headphone, SD card reader, or any other suitable type of port. The stand 18 also includes a power actuator or button 238 (Fig. 2).

With respect to Fig. 9, the base portion 200 includes a first wireless charging mechanism 250 and a second wireless charging mechanism 254. In some embodiments, the base portion 200 may only include one wireless charging mechanism. Alternatively, the base portion 200 may include more than two wireless charging mechanisms. The illustrated wireless charging mechanisms 250, 254 may be inductive charging mechanisms. In particular, the first charging mechanism 250 includes a first charging circuit 258 (e.g., first charging printed circuit board) in communication with a first wireless charging coil 262, and the second charging mechanism 254 includes a second charging circuit 266 (e.g., second charging printed circuit board) in communication with a second wireless charging coil 270. The first and second charging circuits 250, 254 are both in electrical communication (e.g., by a wire or the like) with the first printed circuit board 150. The base portion 200 defines an aperture 274 adjacent the first side. A charging pad 278 (Fig. 1) encloses or covers the aperture 274. In the illustrated embodiment, the charging pad 278 includes a first layer and a second layer positioned on the first layer. The first layer is plastic and the second layer is fabric in the illustrated embodiment, but other suitable materials are also useable. The first and second charging mechanisms 250, 254 are positioned within a footprint of the aperture 274 such that the charging pad 278 covers the charging mechanisms 250, 254. Placing one of the electronic devices 22b, 22c (e.g., a phone or headphones) over the first charging mechanism 250 allows wireless charging of the electronic device 22b, 22c via the first charging mechanism 250. Similarly, placing another of the electronic devices 22b, 22c (e.g., a phone or headphones) over the second charging mechanism 254 allows wireless charging of the electronic device 22b, 22c via the second charging mechanism 254.

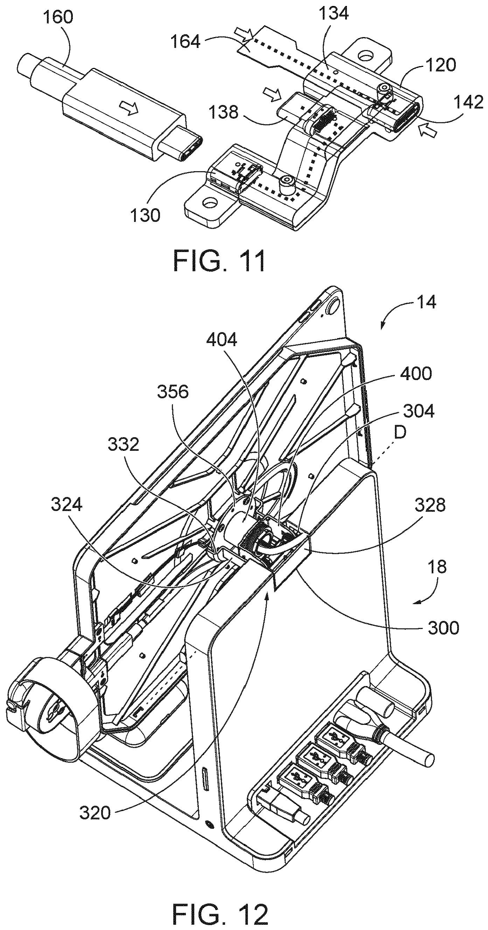

With respect to Fig. 12, the upright portion 204 includes a cut-out or opening 300 on an opposite end from the base portion 200. The cut-out 300 defines a first opening 304 and a second opening opposite the first opening 304. Each of the first opening 304 and the second opening are in communication with an interior of the upright portion 204. The cut-out 300 is sized and shaped to movably receive a coupling mechanism 320, discussed in greater detail below. The coupling mechanism 320 movably (e.g., pivotably and rotatably) and electronically couples the support member 14 to the stand 18. The coupling mechanism 320 also provides a passage that receives the first and second cables 160, 164, thereby allowing electrical communication between the first printed circuit board 150 and the connector body 120.

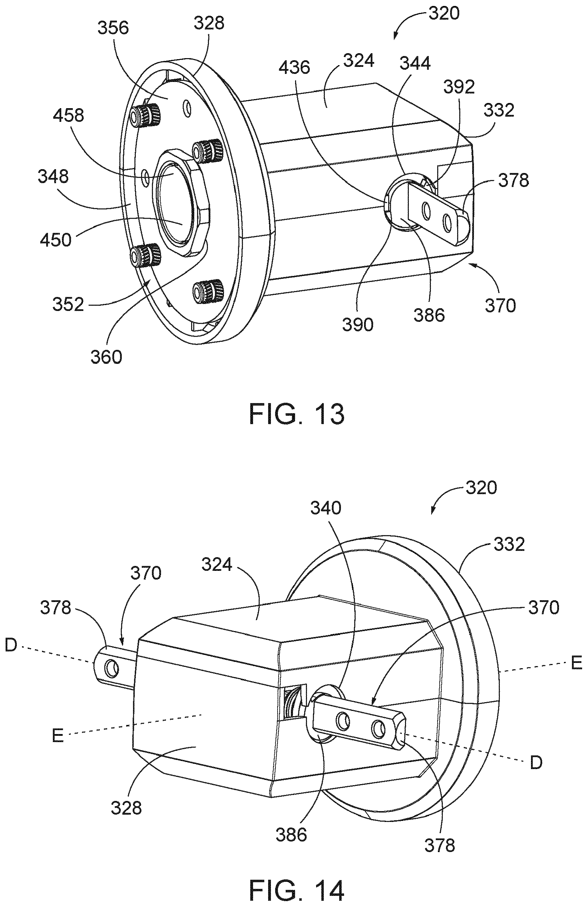

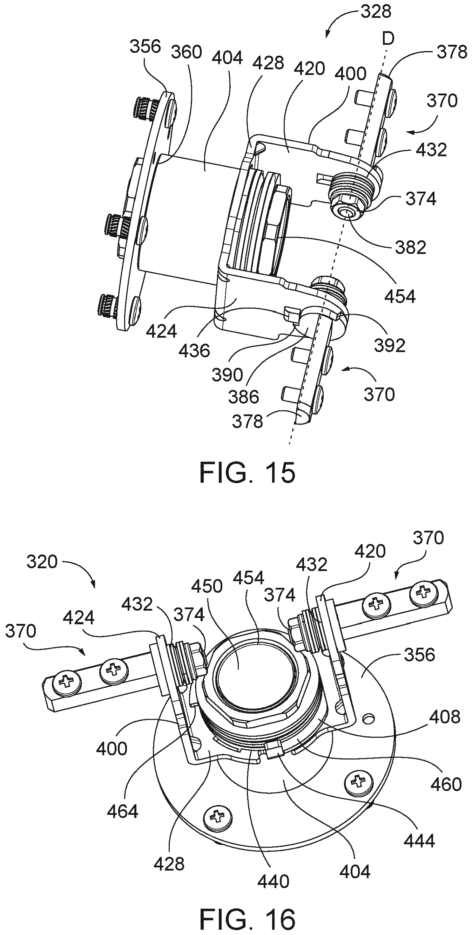

In the illustrated embodiment, as shown in Figs. 13-16, the coupling mechanism 320 includes a housing 324 that has a longitudinal axis E, a first end 328, and a second end 332 opposite the first end 328. In the illustrated embodiment, the housing 324 has a first half and a second half that is coupled to the first half; in other embodiments, the housing 324 may have other configurations (e.g., be a unitary structure). The first end 328 has a first aperture 340 on a first side and a second aperture 344 on a second side. The second end 332 of the housing 324 defines a circular wall 348 delimiting an opening 352. A coupling plate 356 is positioned at or adjacent to the second end 328 of the housing 324 such that the coupling plate 356 covers or overlies the circular opening 352. The coupling plate 356 is coupled to the housing 324 and defines an aperture 360.

Additionally, a first fastener 370 is partially positioned within and extends through the first aperture 340, and a second fastener 370 is partially positioned within and extends through the second aperture 344. As shown, each of the first and second fasteners 370 includes a first end 374 and a second end 378. Each of the first ends 374 includes a pin 382 and a collar 386 that are positioned in the housing 324 of the coupling mechanism 320. Each of the collars 386 includes a first stop recess 390 and a second stop recess 392. Each of the second ends 378 is received by the respective first and second opening 304 of the cutout 300 and is secured (e.g., via fasteners or the like) within the interior of the upright portion 204 of the stand 18. The first and second pins 382 are aligned with one another along a common axis D that is perpendicular to the longitudinal axis C of the upright portion 204.

A hinge bracket 400, a hollow shaft 404, and a cam mechanism 408 are positioned within the housing 324. The hinge bracket 400 includes a first leg 420 and a second leg 424 positioned on opposite sides of an intermediate member 428. Each of the first and second legs 420, 424 includes an aperture 432 and a detent 436. The intermediate member 428 defines an aperture 440 and a stop member 444 (e.g., stop projection), as well.

The hollow shaft 404 defines a bore 450. The hollow shaft 404 extends between the hinge bracket 400 and the coupling plate 356. In particular, a first end 454 of the hollow shaft 404 extends through the aperture 440 in the intermediate member 428 of the hinge bracket 400, and is movably (e.g., rotatably) coupled relative intermediate member 428 of the hinge bracket 400. The hollow shaft 404 extends through the aperture 360 in the coupling plate 356 and is movably coupled to the coupling plate 356. Accordingly, the bore 450 is aligned with the apertures 360, 440, respectively, in the hinge bracket 400 and the coupling plate 356.

The cam mechanism 408 is supported by and positioned adjacent the first end 454 of the hollow shaft 404. That is, the cam mechanism 408 is rotatable with the hollow shaft 404. The cam mechanism 408 has a first cam surface 460 and a second cam surface 464 that is 90 degrees apart from the first cam surface 460.

The first end 328 of the housing 324 is pivotably coupled to the upright portion 204. In particular, the first aperture 340 of the housing 324 and the aperture 432 of the first leg 420 of the hinge bracket 400 are substantially aligned with the first opening 304 in the upright portion 204, and the second aperture 344 of the housing 324 and the first aperture 432 in the second leg 424 of the hinge bracket 400 are substantially aligned with the second opening in the upright portion 204. The aperture 432 in the first leg 424 receives the pin 382 of the first fastener 370, and the collar 386 of the first fastener 370 is positioned between the first leg 420 of the hinge bracket 400 and the first side of the housing 324. Similarly, the aperture 432 in the second leg 424 receives pin 382 of the second fastener 370, and the collar 386 of the second fastener 370 is positioned between the second leg 424 of the hinge bracket 400 and the second side of the housing 324. The detents 436 of each of the first and second legs 420, 424 may be selectively positioned in the respective first and second stop recesses 392, 396 in the collars 386. The housing 324 is pivotable about the axis D.

The second end 332 of the housing 324 is rotatably coupled to the support member 14. The coupling plate 356 is coupled (e.g., by fasteners or the like) to the stand-coupling side 50 of the support member 14 such that the aperture 360 of the coupling plate 356 and the bore 450 of the hollow shaft 404 are aligned with the aperture 74 in the housing 26 of the support member 14. The second end 458 of the hollow shaft 404 is non-movably coupled to the stand-coupling side 50 of the support member 14. Also, the projections 78 extend from the interior of the housing 26 into the coupling mechanism 320, and specifically into the bore 450 of the hollow shaft 404. The wall 348 of the housing 324 of the coupling mechanism 320 is positioned about the wall 70 of the housing 26 of the support member 14. Accordingly, the support member 14 can rotate with the hollow shaft 404 relative to the other components (e.g., the housing 324, the coupling plate 356, and the hinge bracket 400) of the coupling mechanism 320.

The first and second cables 160, 164 extend from the first printed circuit board 150 in the stand 18 to the respective input ports 130, 134 of the connector body 120 in the housing 26 of the support member 14 via the coupling mechanism 320. That is, the first and second power cables 130, 134 extend from the first main circuit board 150 to the connector body 120 through the first opening 304 in the upright portion 204, the first aperture 340 in the housing, the bore 450 of the hollow shaft 404, and the aperture 74 in the housing 26 of the support member 14.

The support member 14 is able to move (e.g., rotate, pivot, hinge, etc.) relative to the stand 18 about the axis D. That is, the support member 14 may be positioned adjacent the first side 208 of the base portion 200 when the detents 436 of the hinge bracket 400 are positioned in the first stop recesses 390 of the collars 386 of the respective fasteners 370. When the detents 436 of the hinge bracket 400 are positioned in the first stop recesses 390 of the collars 386, the axis E of the coupling mechanism 320 is oriented at a first angle relative to the longitudinal axis C of the upright portion 204. Alternatively, the support member 14 may be positioned adjacent the second side 212 of the base portion 200 when the detents 436 of the hinge bracket 400 are positioned in the second stop recesses 392 of the collars 386 of the respective fasteners 340. When the detents 436 of the hinge bracket 400 are positioned in the second stop recesses 392 of the collars 386, the axis E of the coupling mechanism 320 is oriented at a second angle relative to the longitudinal axis C of the upright portion 204. The first and second angles are different. In the illustrated embodiment, the first stop recesses 390 are configured to receive the detents 436 such that the first angle is substantially 90 degrees (e.g., a perpendicular angle). Although not shown herein, the second stop recesses 392 of the illustrated embodiment are configured to receive the detents 436 such that the second angle is substantially 120 degrees. As used herein the term "substantially" refers plus or minus five degrees. In other embodiments, the first and second angles may be any suitable angle. That is, for example, the first and second stop recesses 390, 392 may be positioned about the collar 386 such that when the detents 436 are received therein, other first and second angles may be achieved. In some embodiments, the first angle may range from 15 degrees to 345 degrees and the second angle may range from 15 degrees to 345 degrees. In some embodiments, the first angle may range from 80 degrees to 180 degrees and the second angle may range from 90 degrees to 120 degrees.

When the user desires to change the orientation of the support member 14, and therefore the tablet computer 22a, relative to the first side 208 of the base portion 200 to the second side 212 of the base portion 200, the user exerts a force on the support member 14 in a first direction such that the support member 14 rotates or pivots with the housing 324 of the coupling mechanism 320 about the axis D until the detents 436 are positioned within the second recesses 392 of the collars 386. When the user desires to change the orientation of the support member 14, and therefore the tablet computer 22a, from the second side 212 of the base portion 200 to the first side 208 of the upright portion 204, the user exerts a force on the support member 14 opposite the first direction such that the support member 14 rotates or pivots with the housing 324 of the coupling mechanism 320 about the axis D until the detents 346 are positioned within the first recesses 390 of the collars 386.

The support member 14 is also able to move (e.g., rotate) relative to the stand 18 about the longitudinal axis E of the housing of the coupling mechanism 320. The support member 14 may be rotatable relative to the stand 18 between a first or landscape orientation in which the longitudinal axis A is perpendicular to the longitudinal axis C of the upright portion 204 and a second or portrait orientation in which the longitudinal axis A is parallel to the longitudinal axis C of the upright portion 204. When in the landscape orientation, the first cam surface 460 engages the stop member 444 of the hinge bracket 400. When in the portrait orientation, the second cam surface 464 engages the stop member 444 of the hinge bracket 400. When the user desires to change the orientation of the support member 14, and therefore the tablet computer 22a, from the landscape orientation to the portrait orientation, the user exerts a force on the support member 14 in a second direction, such that the support member 14 rotates with the hollow shaft 404 until the first cam surface 460 engages the stop member 444 of the hinge bracket 400. When the user desires to change the orientation of the support member 14, and therefore the tablet computer 22a, from the landscape orientation to the portrait orientation, the user exerts a force on the support member 14 opposite the second direction, such that the support member 14 rotates with the hollow shaft 404 until the second cam surface 464 engages the stop member 444 of the hinge bracket 400.

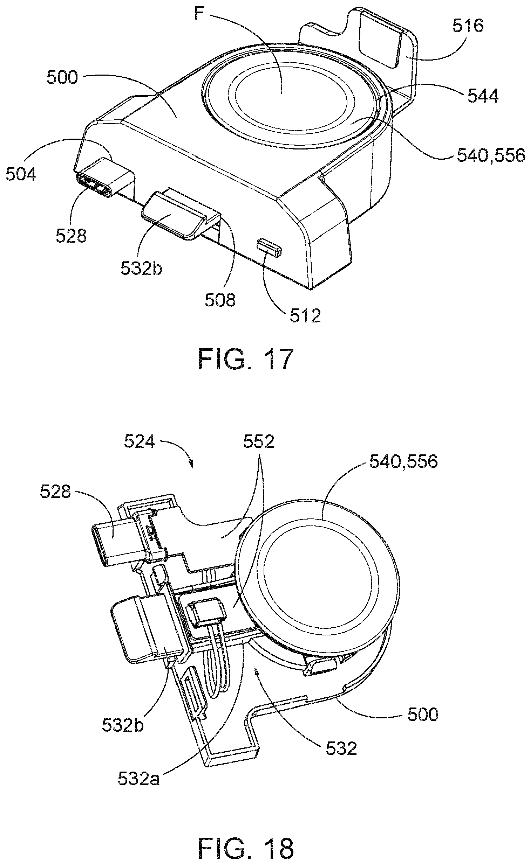

As noted above, in the illustrated embodiment, an adapter 104 is removably coupleable to the support member 14 as well. As shown in Figs. 17-18, the adapter 104 includes a housing 500 having a first aperture 504 and a second aperture 508 positioned adjacent to the first aperture 504. The housing 500 also includes a key feature 512 positioned adjacent the second aperture 508. A flange 516 extends from the housing 500.

The housing 500 supports an adapter charging mechanism 524, an electrical connector 528, and a latch mechanism 532. The electrical connector 528 extends through the first aperture 504. In the illustrated embodiment, the latch mechanism 532 includes a body including a support portion 532a and a hook or latch 532b that is integrally formed with or otherwise coupled to the support portion 532a. The support portion 532a is partially positioned in the housing 500 and extends through the second aperture 508 such that the hook 532b extends from the housing 500. A push button 540 is supported on the support portion 532a of the latch mechanism 532 and is at least partially accessible through an aperture 544 in the housing 500. A biasing mechanism 548 (e.g., a plurality of springs) is positioned within the housing 500 and biases the support portion 532a and the push button 540 outwardly relative to the housing 500 and the hook 532b into a latched position. When the user exerts a force on the push button 540 in the direction of arrow F, the force overcomes the bias of the biasing mechanism 548, thereby depressing the button 540 into the housing 500 and the hook 532b into an unlatched position. The flange 516 is positioned opposite the opposite the electrical connector 508 and the hook 532b. The electrical connector 508 is in electrical communication with the adapter charging mechanism 524, which includes a printed circuit board 552 that is supported within the housing 500 and in communication with a magnetic charging module 556 supported by the housing 500. In the illustrated embodiment, at least a portion of the printed circuit board 552 is positioned on and supported by the support portion 532a of the latch mechanism 532. Additionally, the magnetic charging module 556 is also the push button 540 in the illustrated embodiment.

In use, a user mechanically and electrically couples the adapter 104 to the support member 14. In particular, the user positions the electrical connector 528 in the output port 142, the hook 532b in the second aperture 112 adjacent the output port 142, and the key feature 512 in the recess 116 adjacent the second aperture 112. While the adapter 104 is attached to the support member 14, the push button 540, 556 and the hook 532b are in the latched position. Also, the electrical connector 528 is in electrical communication with the first printed circuit board 150 via the output port 142 such that the adapter charging mechanism 524 is powered by the docking station 10. When the adapter 104 is coupled to the support member 14, an electronic device 22d (e.g., a watch) can be positioned on and supported by the adapter 104 such that magnetic charging module 556 removably secures (e.g., magnetically) the electronic device 22d to the adapter 104 and the adapter charging mechanism 524 allows wireless or magnetic charging of the electronic device 22d. In the illustrated embodiment, the flange 516 assists in properly positioning the electronic device 22d. Moreover, the adapter 104 is useable whether the support member 14 is in portrait orientation or landscape orientation. Accordingly, the housing 500 supports the electronic device 22d when the support member 14 is in landscape orientation, and the housing 500 and the flange 516, together, support the electronic device 22d when the support member 14 in its portrait orientation. Moreover, the docking station 10 is configured to allow all four electronic devices 22a, 22b, 22c, 22d to be supported by the docking station 10 at once even when the support member 14 is in portrait orientation. To release the adapter 104, the user exerts a force on the magnetic push button 540, 556, as noted above, to achieve the unlatched position. The user can then remove the adapter 104 from the support member 14.

Although some aspects have been described in detail with reference to certain preferred embodiments, variations and modifications exist within the scope and spirit of one or more independent aspects as described. Various features and advantages of the invention are set forth in the following claims.

### PREFERRED FEATURES OF THE INVENTION

1. A docking station for a portable electronic device, the docking station comprising:
   a stand having a base portion and an upright portion extending from the base portion;
   a support member coupled to the upright portion of the stand at a height above the base, the support member having a tablet-coupling side at least partially defined by a plate configured to magnetically couple the portable electronic device to the tablet-coupling side of the support member; and
   a lip extending outwardly from the tablet-coupling side and configured to assist in aligning the portable electronic device relative to the plate of the tablet-coupling side of the support member.
2. The docking station of clause 1, wherein the tablet-coupling side of the support member includes a first edge, a second edge opposite the first edge, a third edge, and a fourth edge opposite the third edge, wherein the lip is located along at least a portion of the first edge, at least a portion of the second edge, at least a portion of the third edge, and at least a portion of the fourth edge.
3. The docking station of clause 2, further comprising an angled cutout portion extending between the first edge and the fourth edge such that a rear of the portable electronic device is accessible when magnetically coupled to the support member.
4. The docking station of clause 3, wherein the angled cutout portion is a first angled cutout portion, the docking station further comprising a second angled cutout portion extending between the second edge and the third edge such that the rear of the portable electronic device is simultaneously accessible at the first angled cutout portion and the second angled cutout portion.
5. The docking station of clause 3, wherein the lip does not extend across the angled cutout portion.
6. The docking station of clause 1, further comprising a plurality of ports positioned within the stand, and an electrical connector mounted to the support member, wherein the electrical connector is configured to electrically couple the portable electronic device to the plurality of ports when the portable electronic device is magnetically coupled to the support member.
7. A docking station for a first portable electronic device and a second portable electronic device, the docking station comprising:
   a stand having a base portion and an upright portion extending from the base portion, the base portion configured to support the second portable electronic device;
   a support member movably coupled to the upright portion of the stand at a height above the base, the support member configured to support the first portable electronic device at a height above the base; and
   a wireless charging mechanism positioned within the base portion and configured to charge the second portable electronic device.
8. The docking station of clause 7, further comprising an electrical connector mounted to the support member and configured to charge the first portable electronic device.
9. The docking station of clause 8, further comprising a printed circuit board positioned within the base, wherein the base includes a plurality of ports electrically coupled to the printed circuit board, wherein the wireless charging mechanism is electrically coupled to the printed circuit board, and wherein the electrical connector is electrically coupled to the printed circuit board.
10. The docking station of clause 7, further comprising an electrical connector mounted to the support member and configured to couple to the first portable electronic device, and a power port electrically coupled to the wireless charging mechanism and to the electrical connector.
11. The docking station of clause 7, wherein the support member includes a tablet-coupling side configured to support the first portable electronic device, wherein the base portion includes a charging pad positioned above the wireless charging mechanism and configured to support the second portable electronic device, and wherein the charging pad extends substantially perpendicular to the tablet-coupling side of the support member.
12. The docking station of clause 7, further comprising an adapter mounted to the support member, the adapter configured to support and wirelessly charge a third portable electronic device.
13. The docking station of clause 12, wherein the first portable electronic device is a tablet computer and the third portable electronic device is a watch.
14. The docking station of clause 7, wherein the wireless charging mechanism is an inducting charging mechanism.
15. A docking station for a first portable electronic device and a second portable electronic device, the docking station comprising:
   a stand having a base portion and an upright portion extending from the base portion;
   a support member coupled to the upright portion of the stand at a height above the base, the support member having a tablet-coupling side at least partially defined by a plate configured to magnetically couple the first portable electronic device to the tablet-coupling side of the support member;
   an electrical connector mounted to the support member and configured to charge the first portable electronic device; and
   an adapter removably mounted to the support member, the adapter configured to support and wirelessly charge the second portable electronic device when the adapter is mounted to the support member.
16. The docking station of clause 15, wherein the adapter does not charge the second portable electronic device when the adapter is disconnected from the support member.
17. The docking station of clause 15, further comprising an output port coupled to the support member, wherein the adapter includes an electrical connector configured to engage the output port to electrically couple the adapter to the support member.
18. The docking station of clause 15, wherein the adapter includes a housing that supports a charging mechanism, and a latch mechanism that engages the support member to mechanically couple the adapter to the support member.
19. The docking station of clause 18, further comprising an input configured to disengage the latch mechanism and mechanically decouple the adapter from the support member.
20. The docking station of clause 15, wherein the first portable electronic device is a tablet computer and the second portable electronic device is a watch.

## Claims

1. A docking station for a first portable electronic device and a second portable electronic device, the docking station comprising:
a stand having a base portion and an upright portion extending from the base portion;
a support member coupled to the upright portion of the stand at a height above the base, the support member having a tablet-coupling side at least partially defined by a plate configured to magnetically couple the first portable electronic device to the tablet-coupling side of the support member;
an electrical connector mounted to the support member and configured to charge the first portable electronic device; and
an adapter removably mounted to the support member, the adapter configured to support and wirelessly charge the second portable electronic device when the adapter is mounted to the support member.

2. The docking station of claim 1, wherein the adapter does not charge the second portable electronic device when the adapter is disconnected from the support member.

3. The docking station of claim 1 or 2, further comprising an output port coupled to the support member, wherein the adapter includes an electrical connector configured to engage the output port to electrically couple the adapter to the support member.

4. The docking station of any preceding claim, wherein the adapter includes a housing that supports a charging mechanism, and a latch mechanism that engages the support member to mechanically couple the adapter to the support member, and preferably wherein the docking station further comprises an input configured to disengage the latch mechanism and mechanically decouple the adapter from the support member.

5. The docking station of any preceding claim, wherein the first portable electronic device is a tablet computer and the second portable electronic device is a watch.

6. A docking station for a portable electronic device, the docking station comprising:
a stand having a base portion and an upright portion extending from the base portion;
a support member coupled to the upright portion of the stand at a height above the base, the support member having a tablet-coupling side at least partially defined by a plate configured to magnetically couple the portable electronic device to the tablet-coupling side of the support member; and
a lip extending outwardly from the tablet-coupling side and configured to assist in aligning the portable electronic device relative to the plate of the tablet-coupling side of the support member.

7. The docking station of claim 6, wherein the tablet-coupling side of the support member includes a first edge, a second edge opposite the first edge, a third edge, and a fourth edge opposite the third edge, wherein the lip is located along at least a portion of the first edge, at least a portion of the second edge, at least a portion of the third edge, and at least a portion of the fourth edge.

8. The docking station of claim 7, further comprising an angled cutout portion extending between the first edge and the fourth edge such that a rear of the portable electronic device is accessible when magnetically coupled to the support member.

9. The docking station of claim 8, wherein the angled cutout portion is a first angled cutout portion, the docking station further comprising a second angled cutout portion extending between the second edge and the third edge such that the rear of the portable electronic device is simultaneously accessible at the first angled cutout portion and the second angled cutout portion, or wherein the lip does not extend across the angled cutout portion.

10. The docking station of any one of claims 6 to 9, further comprising a plurality of ports positioned within the stand, and an electrical connector mounted to the support member, wherein the electrical connector is configured to electrically couple the portable electronic device to the plurality of ports when the portable electronic device is magnetically coupled to the support member.

11. A docking station for a first portable electronic device and a second portable electronic device, the docking station comprising:
a stand having a base portion and an upright portion extending from the base portion, the base portion configured to support the second portable electronic device;
a support member movably coupled to the upright portion of the stand at a height above the base, the support member configured to support the first portable electronic device at a height above the base; and
a wireless charging mechanism positioned within the base portion and configured to charge the second portable electronic device.

12. The docking station of claim 11, further comprising an electrical connector mounted to the support member and configured to charge the first portable electronic device, and preferably wherein the docking station further comprises a printed circuit board positioned within the base, wherein the base includes a plurality of ports electrically coupled to the printed circuit board, wherein the wireless charging mechanism is electrically coupled to the printed circuit board, and wherein the electrical connector is electrically coupled to the printed circuit board.

13. The docking station of claim 11 or 12, further comprising an electrical connector mounted to the support member and configured to couple to the first portable electronic device, and a power port electrically coupled to the wireless charging mechanism and to the electrical connector, or wherein the support member includes a tablet-coupling side configured to support the first portable electronic device, wherein the base portion includes a charging pad positioned above the wireless charging mechanism and configured to support the second portable electronic device, and wherein the charging pad extends substantially perpendicular to the tablet-coupling side of the support member.

14. The docking station of any one of claims 11 to 13, further comprising an adapter mounted to the support member, the adapter configured to support and wirelessly charge a third portable electronic device, and preferably wherein the first portable electronic device is a tablet computer and the third portable electronic device is a watch.

15. The docking station of any one of claims 11 to 14, wherein the wireless charging mechanism is an inducting charging mechanism.
